(19) Europäisches Patentamt

European Patent Office

Office européen des brevets

(11)  **EP 1 661 678 B1**

(12)  **EUROPEAN PATENT SPECIFICATION**

(45) Date of publication and mention
of the grant of the patent:
**02.06.2010 Bulletin 2010/22**

(51) Int Cl.:
*B28B 3/10* (2006.01)      *C04B 28/02* (2006.01)
*C04B 14/06* (2006.01)

(21) Application number: **04748555.2**

(22) Date of filing: **16.07.2004**

(86) International application number:
**PCT/LV2004/000007**

(87) International publication number:
**WO 2005/016609 (24.02.2005 Gazette 2005/08)**

(54) **METHOD FOR PRODUCING CONCRETE ARTICLES**

VERFAHREN ZUR HERSTELLUNG VON BETONARTIKELN

PROCEDE DE PRODUCTION D'ELEMENTS EN BETON

(84) Designated Contracting States:
**AT BE BG CH CY CZ DE DK EE ES FI FR GB GR
HU IE IT LI LU MC NL PL PT RO SE SI SK TR**
Designated Extension States:
**LT**

(30) Priority: **14.08.2003 RU 2003124991**

(43) Date of publication of application:
**31.05.2006 Bulletin 2006/22**

(73) Proprietor: **Adminis, Girts
2008 Jurmala (LV)**

(72) Inventor: **Adminis, Girts
2008 Jurmala (LV)**

(74) Representative: **Anohins, Vladimirs
Agency Tria Robit
P.O. Box 22
Riga 1010 (LV)**

(56) References cited:
**WO-A1-98/22269       RU-C1- 2 039 646
RU-C1- 2 188 755**

• **DATABASE WPI Week 200304 Thomson
Scientific, London, GB; AN 2003-044703
XP002533639 & JP 2002 316855 A (ASK KK) 31
October 2002 (2002-10-31)**

## Description

The invention relates to building engineering, particularly, to methods for producing articles, preferably of small architectural forms, from fine-grained concretes.

There is known in the state of the art a method for producing concrete articles of complicated configuration, the method includes the steps of preparing a concrete mixture, filling a form with hardening concrete, placing the form filled with the hardening concrete into an inert medium (e.g., water), compacting the mixture by vibration of either the form only, or both the form and the inert medium, and, when the mixture is compacted, removing the form out of the inert medium and easing of shutters (see patent RU-C1-No. 2140352, 1998).

The surface of an article produced according to the above-mentioned method is smooth and does not have pores, air pockets or other visible defects. The main disadvantage of this known method for producing concrete articles of a complicated configuration consists in that this method does not provide the possibility to obtain articles of high durability in freezing and thawing exposure.

A method for producing concrete articles of complicated configuration, taken as the closest prior art, is also known, this method includes the steps of preparing a fine grained concrete mixture using a clean quartz sand and/or a quartzite filler whose grain size is equal to or less than 10 mm, binder and plasticizer, each form being made of separate parts, and pressing the concrete mixture into forms, for example, by vibrocompression, being executed with a force providing a pressure of about 3-4 atmospheres onto the side walls of the form. Immediately after the concrete mixture is pressed into the forms, the forms are removed, so that each part of the form is separated simultaneously in all the points of the form-article contact, upon which the article is kept in a hardening chamber at a temperature about 20°C and humidity about 100% until 70% of the handling strength is achieved (see patent RU-C1-No. 2188755, 2001).

However, the known method for producing concrete articles of complicated configuration has the following disadvantages. First, the articles produced by the known method do not have high durability in freezing and thawing exposure, as the concrete mixture is pressed into the form in a pressure range providing sufficient stripping strength of the articles, but causing appearance of laitance. The laitance, filling large pores, increases the share of the pores with the size about 0.04-1.0 $\mu$m, which (as was shown by the research) are the most influential on the durability of the articles in freezing and thawing exposure. Moreover, the step of pressing the concrete mixture into the forms at a pressure of about 3-4 atmospheres onto the side walls of the form can be realized using sufficiently complicated and, consequently, expensive equipment. Second, in a preferred embodiment of the known method the size of the quartz sand grains is selected equal to or more than 0,14 mm, which is considerably restrictive for the raw material supplies base, as the content of this fraction in a quartz filler is usually up to 15%.

JP-A- 2002/316855 discloses a method for producing concrete articles according to the pre-amble of claim 1.

The technical problem to be solved by the present invention is providing the possibility to obtain concrete articles, including those of complicated configuration, with a non-dusting and abrasion-resistant surface, similar to the surface of sandstone, and having high durability in freezing and thawing exposure (F 200 according to GOST 1060-95), along with a simplified technological process of producing thereof - due to using a simpler and less expensive technological equipment. The technical result achieved thereby consists in energy consumption reduction (the amount of the force applied to the concrete mixture filling the form) and in reduction of pores volume to concrete volume ratio (pores share) up to 7.5% in the hardened concrete for the pores with the size about 0.04-1.0 $\mu$m.

The set up technical problem is solved by that, in a method for producing concrete articles, including the steps of preparing a concrete mixture using a quartz filler whose grain size is equal to or less than 10 mm, filling forms with the concrete mixture, form removal, and keeping the article in temperature-humidity conditions ensuring the hardening of the concrete mixture; according to the invention, the concrete mixture is prepared using a quartz filler with a fineness modulus (M) ranging from 1.75 to 3.0 and clay and dust content equal to or less than 3.0 mass.%, the form being filled by a layered compaction of the concrete mixture arranged within the form, the thickness of each layer being equal to or less than 200 mm, the water-to-cement ratio (W/C) being selected dependent on the value of M- the quartz filler fineness modulus in compliance with the following formula: W/C=(0.9ö1.1)*(0.72-0.2*M), and for compacting the concrete by ramming means, a pressure ranging from 1.8 to 2.9 kN/cm$^2$ being applied.

Additionally, the set up technical problem is solved due to that:

- the form is made of separate parts;
- the form or each part of the form is removed simultaneously in all the points where the article contacts the form or corresponding part of the form,
- a quartz filler is used whose grain size is equal to or less than 5 mm.

The advantage of the claimed method for producing concrete articles over the known method chosen as the closest prior art is that the above-mentioned parameters of the quartz filler grain-size distribution, the water-to-cement ratio as function of the quartz filler fineness modulus, and operating conditions of filling the form by a layered compaction of the concrete mixture arranged within the form, the mixture being made using a filler with certain grain size distribution and corresponding water-to-cement ratio, provide an effective distribution of the compacting force through the depth of the concrete mass no more than 100 mm from the place the ramming means force being applied. As a result, a homogenous compaction of the concrete mass is provided though all the depth of each layer without appearance of laitance on the surface of the formed article, the volume of the pores with the size about 0.04-1.0 $\mu$m being less than or equal to 7.5% of the volume of the finished article, and the surface of the article is similar to that of sandstone, non-dusting and abrasion-resistant. At the thickness values of the concrete mixture more than 200 mm, and at the above-mentioned pressure range applied to the layer being compacted, the homogeneity of the compaction of the concrete mixture layers arranged in the form is not provided. The use of a quartz filler with a fineness modulus less than 1.75 or more than 3.0 does not provide obtaining articles with a surface similar to that of sandstone. The use of a quartz filler with clay and dust particle content more than 3 mass.% leads to the deterioration of all the parameters of the finished articles, including the strength thereof.

Since the method by invention provides reducing the force applied to the concrete mixture arranged in the form, a simple, and consequently, less expensive technologic equipment can be used.

A further disclosure of the present invention will be performed by specific examples, being only illustrative of the possibility to achieve the technical result, providing that the above features are present in their entirety, but the below examples are not restrictive of the scope of the present invention.

The method for producing concrete articles is embodied as follows. A fine-grained concrete mixture is prepared using a quartz filler, e.g., quartz sand with the grain sizes less than or equal to 10 mm (preferably - less than or equal to 5 mm), with clay and dust particle content less than or equal to 3 mass.%, and with a fineness modulus ranging from 1.75 to 3.0, the mixture also contains a binder and, if necessary, a plasticizer. The following materials can be used as a binder: portland cement, cement, cement with alkaliresistant mineral stain, or pigmented cement.

Various additives, such as plasticizers, microsilica etc., can be included in the concrete mixture, but their presence shall comply with the above-mentioned filler grain-size distribution, which, as it is worth noting, enables broadening the raw material supplies base of the method by invention in comparison with that of the closest prior art. The maximum level of additives in the concrete mixture is established by experiment and is determined when the volume of the pores with the size about 0.04-1.0 $\mu$m in the finished article becomes more than 7.5%.

The water-to-cement ratio (W/C) is selected dependent on the value of M - the quartz filler fineness modulus in compliance with the following formula:

$$W/C=(0.9\div1.1)*(0.72-0.2*M).$$

The value of M - the quartz filler fineness modulus is selected dependent on the desired character of the surface (the kind of sandstone, which is imitated), and on the filigreeness of the concrete article. Herewith, as noted above, the fineness modulus is ranging from 1.75 to 3.0.

Thereafter, the form is filled by a layered compaction of the concrete mixture arranged within the form, the thickness of each layer being equal to or less than 200 mm (preferably, between 100 and 200 mm), and each layer is compacted by ramming, the pressure on the compacted layer provided by ramming means ranging between 1.8 and 2.9 kN/cm². Preferably, the acting surface of said ramming means ranging between 1 and 20 cm².

Reinforcing the concrete articles is performed by arranging seamy-surfaced re-bars between the layers of the concrete mixture filled into the form. This enables simplification of the compacting procedure.

Each form can be made either single-piece, or consisting of separate parts, but, in any case, the construction of the form shall provide, the removal of the form or each part of the form simultaneously in all the points where the article contacts the form or corresponding part of the form, respectively, during the form removal procedure.

The form removal is performed at any moment after the concrete mixture is arranged within the form, except for cases of the articles of large sizes. In such cases, the form removal is performed after the concrete has hardened.

From the moment of arranging the concrete mass within the forms until the concrete has achieved 70% of the handling strength, the articles are kept in temperature-humidity conditions ensuring the hardening of the concrete mixture. Any known methods can be used for this purpose: keeping the articles in a non-disassembled form with its open part, heat-isolated and covered with a vapor-tight film; keeping the articles after the form removal in a medium at a temperature 18-20°C and humidity close to 100%; etc.

Hereafter, the method by invention will be described basing on the results obtained from testing four samples made using a quartz filler with the grain sizes less than or equal to 5 mm, the content of dust and clay particles (mass.%) and the fineness modulus (M) being equal to (dimensionless units), respectively, for the first sample - 0.6 mass.%, M=3.0; for the second sample - 0.6 mass.%, M=2.5; for the third sample - 1.3 mass.%, M=2.12; and for the fourth sample - 2.7 mass.%, M=1.75. The water-to-cement ratio (W/C) was: for the first sample - 0.13; for the second sample - 0.22; for the third sample - 0.3; and for the fourth sample - 0.37. The form removal for all of the samples was performed immediately after the formation, providing removing the form from all points of the surface of each sample simultaneously. Upon the form removal, the samples were kept in a medium at a temperature 18-20°C and humidity 95-98%.

The samples were subjected to testing after 28 days of the concrete hardening. The compression strength was determined according to GOST 10180-90, the freeze-thaw resistance was determined according to GOST 10060-95, the abrasion resistance was determined according to GOST 13087-81, and the pore sizes were determined using the mercury-intrusion porosimeter AUTOPORE 11 9220. The surfaces of all the samples were similar to that of sandstone, the freeze-thaw resistance being F 200, the compression strength - 38.4-43.3 MPa. The volume share of the pores with the sizes 0.04-1.0 $\mu$m was: in the first sample - 7.5%, in the second sample - 7.4%; in the third sample - 5.9%; and in the fourth sample - 5.0%. The abrasion resistance of the samples is 0.28:0.32 G/cm$^2$.

The above data show that the method by invention meets the patentability criterion "industrial applicability".

## Claims

1. A method for producing concrete articles including the steps of preparing a fine-grained concrete mixture using a quartz filler whose grain size is equal to or less than 10 mm, filling a form with said concrete mixture, form removal; and keeping the article in temperature-humidity conditions ensuring the hardening of said concrete mixture,
said concrete mixture being prepared using a quartz filler with a fineness modulus (M) ranging from 1.75 to 3.0 and clay and dust content equal to or less than 3.0 mass.%, the water-to-cement ratio (W/C) being selected dependent on the value of M - the quartz filler fineness modulus in compliance with the following formula:
W/C=-(0.9ö1.1)*(0.72-0.2*M), **characterized in that** the form is filled by a layered compaction of the concrete mixture arranged within the form, the thickness of each layer being equal to or less than 200 mm, and for compacting the concrete by ramming means, a pressure ranging from 1.8 to 2.9 kN/cm$^2$ is applied.

2. The method of claim 1, **characterized in that** said form is made of separate parts.

3. The method of any claim 1 or 2, **characterized in that** said form removal is performed in such a manner that the form or each part of the form is removed simultaneously in all the points where the article contacts the form or corresponding part of the form, respectively.

4. The method of claim 1 **characterized in that** the grain size of said quartz filler is equal to or less than 5 mm.

## Patentansprüche

1. Verfahren zur Herstellung von Betonwaren, folgende Schritte umfassend:

   Zubereitung vom feinkörningen Betongemisch, anwendend Quarzfüllstoff mit Korndimension von 10 mm oder weniger, Auffüllung von Schalungsform mit diesem Betongemisch, Ausschalung und Lagerung der Waren bei Temperatur- und Feuchtigkeitbedingungen, die Erstarren von dieser Betonmasse ermöglichen, wobei diese Betonmasse bei Nutzung des Quarzfüllstoffes mit dem Körnungsmodul (M) im Bereich von 1.75 bis 3.0 Gewichtsprozenten und mit dem Gehalt von tonartigen und staubartigen Teilchen gleich oder weniger als 3.0 Gewichtsprozenten zubereitet wird, das Wasser-Zement-Verhältnis (W/C) in Abhängigkeit von der Grösse von M - dem Körnungsmodul des
   Quarzfüllstoffes entsprechend der folgenden Gleichung:
   W/C=(0.9ö1.1)*(0.72-0.2*M), ausgewählt wird, **dadurch gekennzeichnet, dass** die Schalungsform mit schichtweise Rammen vom Betongemisch ausgefüllt wird, wobei die Schictdikke gleich oder weniger als 200 mm ist, und bei Rammen vom Betongemisch mit Hilfe der Mittel für Rammen der Druck im Bereich von 1.8 bis 3.0 2.9 kN/cm$^2$ eingesetzt wird.

2. Verfahren nach Anspruch 1, **dadurch gekennzeichnet, dass** die Schalungsform aus Einzelbestandteilen angefertigt ist.

3. Verfahren nach Anspruch 1 oder 2, **dadurch gekennzeichnet, dass** die Ausschalung auf solcher Weise ausgefürht ist, dass die Schalungsform oder jeder Einzelbestandteil der Schalungsform gleichzeitig in allen Punkten, in welchen die Betonware mit der Schalungsform, beziehungsweise, mit dem Einzellbestandteil der Schalungsform kontaktiert, abgetrennt wird.

4. Verfahren nach Anspruch 1, **dadurch gekennzeichnet, dass** die Korndimension des Quarzfüllstoffes gleich oder weniger als 5 mm ist.

## Revendications

1. Procédé de fabrication de pièces en béton comprenant les étapes de préparation d'un mélange de béton à grains fins en utilisant le quartz comme matériau de remplissage présentant une granulométrie maximale de 10 mm, de remplissage du moule en mélange de béton susdit, le démoulage, le stockage aux régimes de température et d'humidité qui assurent le durcissement du mélange de béton susdit, préparé en utilisant le quartz comme matériau de remplissage ayant un module de grosseur (M) de 1,75 à 3.0 et contenant des particules argileuses et pulvérulentes dont le contenu maximale est de 3 mass.%, et le rapport eau-ciment (W/C) est choisi selon le module de grosseur (M) du quartz, utilisé comme matériau de remplissage, suivant la relation W/C=(0.9ö1.1)*(0.72-0.2*M),

**caractérisé en ce qu'**on réalise le remplissage du moule en mélange de béton par damage couche par couche, l'épaisseur maximale d'une couche étant de 200 mm, en exerçant une pression variant de 1.8 à 2.9 kN/cm$^2$ sur la couche du mélange de béton à damer.

2. Le procédé selon la revendication 1, **caractérisé en ce que** le moule est réalisé en parties séparées.

3. Le procédé selon la revendication 1ou 2, **caractérisé en ce que** le démoulage s'effectue par détachement du moule ou de chaque partie du moule simultanément dans tous les points de contact de la pièce produite avec la partie correspondante du moule.

4. Le procédé selon la revendication 1, **caractérisé en ce que** le matériau de remplissage utilisé est le quartz de granulométrie maximale de 5 mm.

**EP 1 661 678 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2140352 C1
- RU 1998 C1
- RU 2188755 C1
- RU 2001 C1
- JP 2002316855 A